Europäisches Patentamt

(19) European Patent Office

Office européen des brevets

(11) Publication number: **0 207 460**
**B1**

(12) **EUROPEAN PATENT SPECIFICATION**

(45) Date of publication of the patent specification:
**19.09.90**

(51) Int. Cl.⁵: **B65G 17/08**

(21) Application number: **86108775.7**

(22) Date of filing: **27.06.86**

(54) **Lightweight modular conveyor belt.**

(30) Priority: **01.07.85 US 750896**

(73) Proprietor: **The Laitram Corporation, 220 Laitram Lane, Harahan Louisiana 70123(US)**

(43) Date of publication of application:
**07.01.87 Bulletin 87/2**

(72) Inventor: **Lapeyre, James M., 13 Richmond Place, New Orleans Louisiana 70150(US)**

(45) Publication of the grant of the patent:
**19.09.90 Bulletin 90/38**

(74) Representative: **Kraus, Walter, Dr. et al, Patentanwälte Kraus, Weisert & Partner Thomas-Wimmer-Ring 15, D-8000 München 22(DE)**

(84) Designated Contracting States:
**DE FR GB IT**

(56) References cited:
**EP-A- 0 113 909**
**US-A- 3 774 752**
**US-A- 4 438 838**

## Description

Field of the Invention

The invention relates to a conveyor belt adapted to be driven by a plurality of sprocket wheels having teeth, comprising:

a plurality of identical modules of integral molded construction linked together end-to-end to form the conveyor belt, each module including

a plurality of link elements of equal length disposed in laterally spaced relation, each of the plurality of link elements having an upper surface and a lower surface, and wherein each module has a length equal to the length of the individual link elements and wherein each module has a width determined by the plurality of link elements in the laterally spaced relation;

each of the plurality of link elements terminating in first and second link ends, respectively, the length of each individual link element being defined generally as the distance between the first and second link ends, each of the first and second link ends having a transversely extending portion forming thereby a stepped configuration, and a central opening formed therethrough, the central openings of the first and second link ends, respectively, of each module defining pivot axes therefor, and wherein the corresponding first and second link ends of each individual link element are parallel with respect to one another;

each of the plurality of link elements having a rib integrally formed with and extending upwardly from the upper surface of the link ends, and wherein each rib extends from the first link end to the second link end of the corresponding link element;

first and second cross members integrally formed with the link elements and angularly disposed with respect to and extending transversely between adjacent link elements, the first and second cross members having outwardly sloping surfaces, respectively, confronting sloping surfaces, and upper and lower surfaces, respectively, coplanar with the corresponding upper and lower surfaces of the adjacent link elements, and wherein the confronting surfaces define sprocket recesses, adapted to mate with the teeth of the plurality of sprocket wheels, disposed between the pivot axes of the module; and

a plurality of pivot rods for linking the plurality of modules together end-to-end to form the conveyor belt, wherein linking of the plurality of modules together end-to-end to form the conveyor belt is achieved by inserting pivot rods in the central openings of alternately adjacent first link ends and second link ends such that the corresponding transversely extending portions of adjacent first link ends and adjacent second link ends, respectively, are linked together in confronting relation.

Background of the Invention

Modular conveyor belts are known which comprise modules pivotally connected to one other, each module being molded as a single unit, preferably of a plastic material. Such conveyor belts are shown, for example, in US-A-3 870 141 and US-A-4 051 949 of the same inventor who has invented the present conveyor belt. Each module includes a number of parallel spaced links having end sections with aligned holes for accommodation of pivot rods, and intermediate sections joined by integral cross members to form a rigid supporting grid. The upper portions of the links and intermediate sections define a conveyor surface on which a product is carried. Alternatively, the link elements can extend upwardly to a plane which is above the plane of the upper portions of the intermediate sections to provide raised link elements or raised ribs which define parallel longitudinal channels between adjacent links, and in which channels a conveyor comb can be disposed for transfer to a product to and from the conveyor belt, as shown in aforesaid US-A-4 051 949.

Furthermore, the patentee has proposed in a former approach a conveyor module which includes sprocket recesses located midway between the pivot axes and which are adapted to mate with corresponding sprocket teeth of an associated sprocket wheel. The sprocket recesses are provided by angled surfaces of the intermediate sections. These intermediate sprocket recesses provide the benefit of minimizing chordial action and scrubbing between the mating surfaces of the module and sprocket.

Moreover, a conveyor belt of the type mentioned in the beginning is disclosed in the patentee's EP-A-113 909 adjacent mated modules of this type need to be rotated by 180° to achieve module linking wherein the link ends of adjacent mated modules are in abutting engagement. Further, when assembled the linked modules form a conveyor belt having an alternating stepped configuration whereas a straight-edged configuration is much more desirable.

A conveyor belt comprising a plurality of identical modules of integral molded construction linked together end-to-end which modules form a conveyor belt of a straight-edged configuration is disclosed in US-A-3 774 752. In order to achieve the straight-edged configuration the modules are constructed such that corresponding first and second link ends are laterally offset with respect to one another. There are parallel bars which extend between each link end and the edge of the module which is straight opposite such link end. Thus, the lines of pull between the link ends extend obliquely to the bars and therefore there must be provided a relatively great number of such bars and/or relatively strong bars. Thus, the amount of material needed for strengthening is relatively high.

Summary of the Invention

The present invention provides a conveyor belt which is similar to, and an improvement over the aforesaid structures of EP-A-113 909. The conveyor belt of the type mentioned in the beginning is characterized according to the present invention in that

corresponding first and second link ends of each individual link element are laterally offset with respect to one another;

the transversely extending portions of the first and second link ends extending up to their respective first or second cross members have a uniform thickness, so that the stepped configuration extends continuously between the respective link end and cross member, wherein the upper surfaces of the transversely extending portion of the first link end and the transversely extending portion of the second link end of the corresponding link element are coplanar with the upper surfaces of the first and second cross members and extend transversely in opposite directions with respect to the corresponding rib; and

wherein the rib portions of the said parallel offset link ends of each link element are connected integrally by an oblique rib portion.

The lateral offset of the first and second link ends provides a very small offset in the line of pull through the first and second link ends of each link element.

Further, due to the lateral offset of the first and second link ends of each link element, adjacent mated modules do not need to be rotated 180° to achieve module linking.

Finally, the linked modules of the present invention form a conveyor belt having a straight-edged configuration.

Further developments of the invention are stated in the dependent claims.

Description of the Drawings

The invention will be more fully understood from the following detailed description taken in conjunction with the accompanying drawings, in which:

Figure 1 is a bottom plan view of an embodiment of interconnected conveyor modules embodying the invention;

Figure 2 is a top plan view thereof;

Figure 3 is a sectional view along the lines 19-19 of Figure 2

Figure 4 is a sectional view along the lines 20-20 of Figure 3

Figure 5 is a sectional view along the lines 21-21 of Figure 3; and

Figure 6 is an elevation view of a modular conveyor belt with sprocket wheel and conveyor comb.

Detailed Description of the Invention

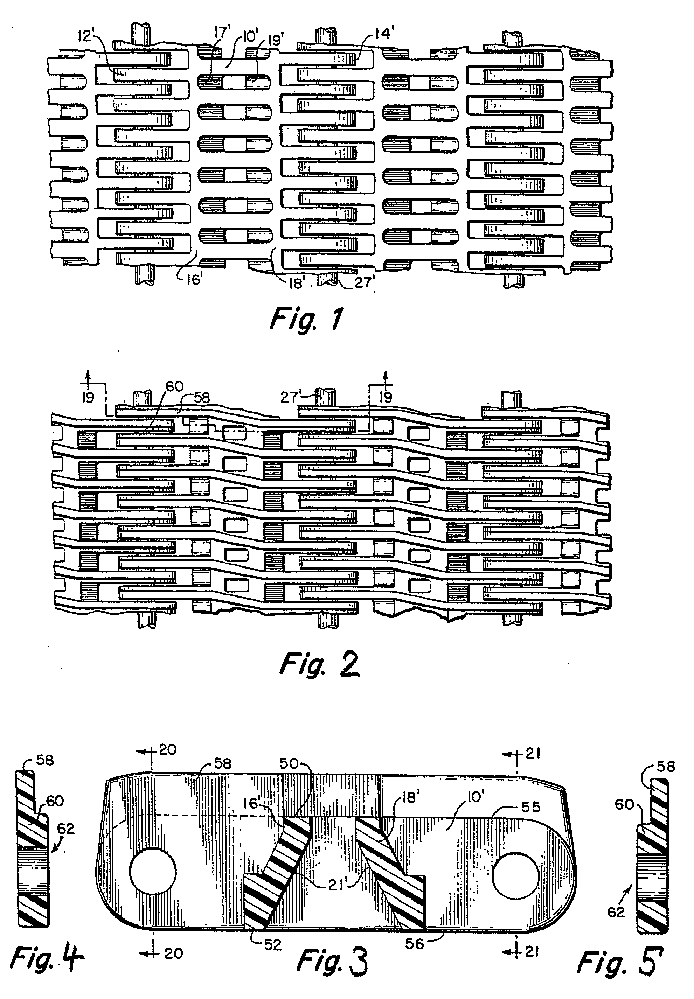

A conveyor module embodiment is shown in Figures 1 - 5. Each of the modules includes a plurality of stepped-link elements 10', each terminating in respective link ends 12' and 14' and arranged in laterally spaced relationship across the width of the module. The boundary of a conveyor formed by such stepped modules thereby defines a generally rectangular configuration, not specifically illustrated. The link elements 10' are spaced and joined by first and second transverse members 16' and 18' which have upper and lower edges which are coplanar with the respective upper and lower edges of the link elements 10' as can best be seen in Figures 3 through 5. The transverse member 16' has sloping surfaces 17' which downwardly and outwardly extend toward link ends 12', while the transverse member 18' has sloping surfaces 19' which downwardly and outwardly extend toward link ends 14', the confronting sloping surfaces 21' (Figure 3) defining sprocket recesses centrally disposed between the pivot axes. The link elements 10' and transverse members 16' and 18' define an open grid construction that prevents any significant bending of the module about its longitudinal or transverse axes.

The cross members 16', 18' have upper and lower surfaces 50, 52 (Figure 3), coplanar with respective upper and lower surfaces 55, 56 (Figure 3) of the link elements. Stepped-ribs 58 (Figure 2) are integrally formed with the upper surfaces of the links and extend from link end to link end. As can best be seen in Figures 2, 4, 5, the dimensions of the ribs 58 are selected to be less than the corresponding dimensions of said link ends defining a transversely extending portion 60 projecting toward a confronting link end and terminating short of the confronting link by an amount to accommodate the link end of a mated module. The portions 60 have a body configuration that defines central openings 62 therethrough which are aligned on respectively pivotal axes of the modules. A pivot rod or pin 27' is inserted in aligned openings 62 of interconnected modules and retains the modules for pivotal movement with respect to each other. The portions 60 have a body configuration that wholly surrounds the pivot rods.

The flat sides of the link ends of one module are in engagement with the flat sides of the link ends of a mated module, as can best be seen in Figures 1 and 2.

The thickness of the portions 60 is slightly less than the spacing between adjacent link ends such as the link ends fit within the corresponding spacings of adjacent modules and provide sufficient bearing surface with a pivot rod to accomodate the tensile forces on the belt during its driven operation.

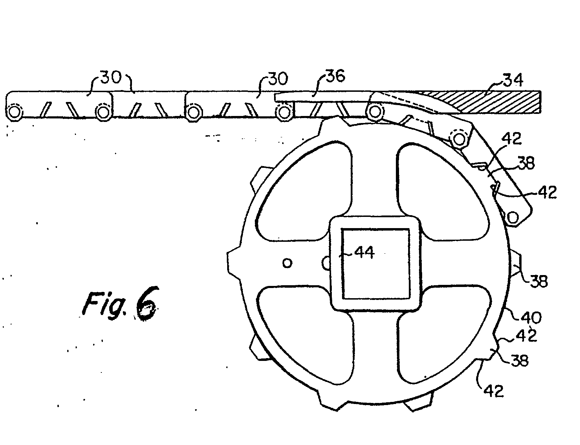

A conveyor comb 34 having the tines 36 may be disposed between the innerspace defined between adjacent stepped ribs 58 to receive and remove elements onto and off the conveyor module as described below in connection with Figure 6. Although the modules 30 shown in Figure 6 as being connected to a conveyor belt are not modules in accordance with Figures 1 to 5. This Figure shows the manner in which the modules of Figures 1 to 5 can be connected to a conveyor belt and driven by a sprocket wheel.

The sprocket recesses defined by the surfaces 21' (Figure 3) are adapted to mate with corresponding sprocket teeth 38 of an associated sprocket wheel 40, as shown in Figure 6. The sprocket wheel 40 has teeth 38 with parallel side surfaces, and inclined front and back surfaces 42 configured to engage the corresponding surfaces 21' of the sprocket recesses. In the illustrated embodiment, the sprocket wheel 40 has a hub 44 adapted to be secured to a square shaft, and a plurality of sprocket wheels are employed across the width of the module to provide intended support and driving force. The centrally driven sprocket recesses provide the benefits of minimizing chordal action and scrubbing between the mating surfaces of the module and the sprocket wheel.

The stepped ribs 58 define innerspaces between adjacent link elements 10'. A conveyor comb 34 has its tines 36 disposed within these innerspaces in the manner shown in Figure 6, the upper surfaces of the tines 36 being substantially at or slightly below the conveying surface and by which a product is removed from the conveyor belt as the conveyor traverses a downwardly curved path, as shown in Figure 6.

**Claims**

1. A conveyor belt adapted to be driven by a plurality of sprocket wheels (40) having teeth (38), comprising:
a plurality of identical modules of integral molded construction linked together end-to-end to form the conveyor belt, each module including
a plurality of link elements (10') of equal length disposed in laterally spaced relation, each of the plurality of link elements (10') having an upper surface (55) and a lower surface (56), and wherein each module has a length equal to the length of the individual link elements (10') and wherein each module has a width determined by the plurality of link elements (10') in the laterally spaced relation;
each of the plurality of link elements (10') terminating in first and second link ends (12', 14'), respectively, the length of each individual link element (10') being defined generally as the distance between the first and second link ends (12', 14'), each of the first and second link ends (12', 14') having a transversely extending portion (60) forming thereby a stepped configuration, and a central opening (62) formed therethrough, the central openings (62) of the first and second link ends (12', 14'), respectively, of each module defining pivot axes therefor, and wherein the corresponding first and second link ends (12', 14') of each individual link element (10') are parallel with respect to one another;
each of the plurality of link elements (10') having a rib (58) integrally formed with and extending upwardly from the upper surface (55) of the link ends (12', 14'), and wherein each rib (58) extends from the first link end (12') to the second link end (14') of the corresponding link element (10');
first and second cross members (16', 18') intergrally formed with the link elements (10') and angularly disposed with respect to and extending transversely between adjacent link elements (10'), the first and second cross members (16', 18') having outwardly sloping surfaces (17', 19'), respectively, confronting sloping surfaces (21'), and upper and lower surfaces (50, 52), respectively, coplanar with the corresponding upper and lower surfaces (55, 56) of the adjacent link elements (10'), and wherein the confronting surfaces (21') define sprocket recesses, adapted to mate with the teeth (38) of the plurality of sprocket wheels (40), disposed between the pivot axes of the module; and
a plurality of pivot rods (27') for linking the plurality of modules together end-to-end to form the convey-

or belt, wherein linking of the plurality of modules together end-to-end to form the conveyor belt is achieved by inserting pivot rods (27') in the central openings (62) of alternately adjacent first link ends (12', 12') and second link ends (14', 14') such that the corresponding transversely extending portions (60) of adjacent first link ends (12', 12') and adjacent second link ends (14', 14'), respectively, are linked together in confronting relation; characterized in that corresponding first and second link ends (12', 14') of each individual link element (10') are laterally offset with respect to one another;
the transversely extending portions (60) of the first and second link ends (12', 14') extending up to their respective first or second cross members (16', 18') have a uniform thickness, so that the stepped configuration extends continuously between the respective link end (12', 14') and cross member (16', 18'), wherein the upper surfaces of the transversely extending portion (60) of the first link end (12') and the transversely extending portion (60) of the second link end (14') of the corresponding link element (10') are coplanar with the upper surfaces of the first and second cross members (16', 18') and extend transversely in opposite directions with respect to the corresponding rib (58); and
wherein the rib portions of the said parallel offset link ends (12', 14') of each link element (10') are connected integrally by an oblique rib portion.

2. The conveyor belt of claim 1, characterized by including a conveyor comb (34) disposed proximate an end of the conveyor belt, the conveyor comb (34) including a plurality of tines (36) disposed to pass between the ribs (58) of the conveyor belt.

3. The conveyor belt of claim 1, characterized in that the plurality of modules linked together end-to-end form a boundary of generally rectangular configuration.

**Patentansprüche**

1. Förderband, das dazu geeignet ist, mittels einer Mehrzahl von Kettenzahnrädern (40), die Zähne (38) haben, angetrieben zu werden, umfassend:
eine Mehrzahl von identischen Modulen von integral geformtem Aufbau, die Ende-an-Ende zur Ausbildung des Förderbands miteinander verbunden sind, wobei jedes Modul folgendes aufweist:
eine Mehrzahl von Verbindungsgliedelementen (10') von gleicher Länge, die in seitlich beabstandeter Beziehung angeordnet sind, wobei jedes der Mehrzahl von Verbindungsgliedelementen (10') eine obere Oberfläche (55) und eine untere Oberfläche (56) hat, und worin jedes Modul eine Länge hat, die gleich der Länge der individuellen Verbindungsgliedelemente (10') ist, und worin jedes Modul eine Breite hat, die durch die Mehrzahl von Verbindungsgliedelementen (10') in der seitlich beabstandeten Beziehung bestimmt ist;
wobei jedes aus der Mehrzahl der Verbindungsgliedelemente (10') jeweils in einem ersten und zweiten Verbindungsgliedende (12', 14') endet, wobei die Länge von jedem individuellen Verbindungsgliedelement (10') generell als der Abstand zwischen dem ersten und zweiten Verbindungsgliedende (12', 14') definiert ist, wobei jedes aus den ersten und zweiten Verbindungsgliedenden (12', 14') einen sich quer erstreckenden Teil (60) hat, so daß hierdurch eine abgestufte Konfiguration ausgebildet ist, und eine mittige Öffnung (62), die dadurch ausgebildet ist, wobei die mittigen Öffnungen (62) der jeweiligen ersten und zweiten Verbindungsgliedenden (12', 14') von jedem Modul Drehachsen hierfür definieren, und worin das entsprechende erste und zweite Verbindungsgliedende (12', 14') von jedem individuellen Verbindungsgliedelement (10') parallel mit Bezug aufeinander sind;

wobei jedes aus der Mehrzahl der Verbindungsgliedelemente (10') eine Rippe (58) hat, die integral mit der oberen Oberfläche (55) der Verbindungsgliedenden (12', 14') ist und sich von dieser oberen Oberfläche (55) nach aufwärts erstreckt, und worin sich jede Rippe (58) von dem ersten Verbindungsgliedende (12') zu dem zweiten Verbindungsgliedende (14') des entsprechenden Verbindungsgliedelements (10') erstreckt;

erste und zweite Querteile (16', 18'), die integral mit den Verbindungsgliedelementen (10') ausgebildet und winklig mit Bezug auf benachbarte Verbindungsgliedelemente (10') angeordnet sind und sich quer zwischen benachbarten Verbindungsgliedelementen (10') erstrecken, wobei die ersten und zweiten Querteile (16', 18') jeweils nach auswärts geneigte Oberflächen (17', 19') haben, sowie gegenüberliegende geneigte Oberflächen (21'), und jeweils obere und untere Oberflächen (50, 52), die koplanar mit den entsprechenden oberen und unteren Oberflächen (55, 56) der benachbarten Verbindungsgliedelemente (10') sind, und worin die gegenüberliegenden Oberflächen (21') Kettenzahnradausnehmungen, die dazu geeignet sind, mit den Zähnen (38) der Mehrzahl von Kettenzahnrädern (40) zusammenzupassen, begrenzen, welche zwischen den Drehachsen des Moduls angeordnet sind; und

eine Mehrzahl von Drehstäben (27') zum Verbinden der Mehrzahl von Modulen miteinander Ende-an-Ende zur Ausbildung des Förderbands, worin das Verbinden der Mehrzahl von Modulen miteinander Ende-an-Ende zur Ausbildung des Förderbands durch Einfügen von Drehstäben (27') in die mittigen Öffnungen (62) von alternierend benachbarten ersten Verbindungsgliedenden (12', 12') und zweiten Verbindungsgliedenden (14', 14') erzielt wird, derart, daß die entsprechenden, sich quer erstreckenden Teile (60) von jeweiligen benachbarten ersten Verbindungsgliedenden (12', 12') und benachbarten zweiten Verbindungsgliedenden (14', 14') in gegenüberliegender Beziehung miteinander verbunden werden; dadurch gekennzeichnet, daß

das entsprechende erste und zweite Verbindungsgliedende (12', 14') von jedem individuellen Verbindungsgliedelement (10') seitlich mit Bezug aufeinander versetzt sind;

die sich quer erstreckenden Teile (60) der ersten und zweiten Verbindungsgliedenden (12', 14'), die sich bis zu ihren jeweiligen ersten oder zweiten Querteilen (16', 18') erstrecken, eine gleichförmige Dicke haben, so daß sich die abgestufte Konfiguration kontinuierlich zwischen dem jeweiligen Verbindungsgliedende (12', 14') und dem Querteil (16', 18') erstreckt, worin die oberen Oberflächen des sich quer erstreckenden Teils (60) des ersten Verbindungsgliedendes (12') und des sich quer erstreckenden Teils (60) des zweiten Verbindungsgliedendes (14') des entsprechenden Verbindungsgliedelements (10') koplanar mit den oberen Oberflächen der ersten und zweiten Querteile (16', 18') sind und sich quer in entgegengesetzten Richtungen mit Bezug auf die entsprechende Rippe (58) erstrecken; und worin die Rippenteile der erwähnten parallelen versetzten Verbindungsgliedenden (12', 14') von jedem Verbindungsgliedelement (10') integral durch einen schrägen Rippenteil verbunden sind.

2. Förderband nach Anspruch 1, dadurch gekennzeichnet, daß es einen Förderkamm (34) aufweist, der benachbart einem Ende des Förderbands angeordnet ist, wobei der Förderkamm (34) eine Mehrzahl von Zinken (36) aufweist, die so angeordnet sind, daß sie zwischen den Rippen (58) des Förderbands verlaufen.

3. Förderband nach Anspruch 1, dadurch gekennzeichnet, daß die Mehrzahl von Modulen, die Ende-an-Ende miteinander verbunden sind, eine Begrenzung von generell rechteckiger Konfiguration bilden.

## Revendications

1. Courroie transporteuse adaptée pour être entraînée par une pluralité de roues à chaînes (40) munies de dents (38), comprenant :

une pluralité de modules identiques d'une construction moulée en une seule pièce, articulés les uns aux autres bout à bout pour former la courroie transporteuse, chaque module comprenant une pluralité d'éléments joues (10') d'égale longueur disposés dans des positions espacées latéralement, chacun des éléments joues de la pluralité d'éléments joues (10') possédant une surface supérieure (55) et une surface inférieure (56), et où chaque module possède une longueur égale à la longueur des éléments joues individuels (10') et où chaque module possède une largeur déterminée par la pluralité d'éléments joues (10') disposés dans des positions espacées latéralement ;

chacun des éléments joues de la pluralité d'éléments joues (10') se terminant respectivement par une première et une deuxième extrémités de joue (12', 14'), la longueur de chaque élément joue (10') individuel étant définie de façon générale par la distance séparant les première et deuxième extrémités (12', 14') de la joue, chacune des première et deuxième extrémités (12', 14') de la joue possédant une portion en saillie transversale pour former de cette façon une configuration épaulée, et une ouverture centrale (62) qui la traverse, les ouvertures centrales (62) des première et deuxième extrémités (12', 14') des joues de chaque module définissant respectivement des axes d'articulation pour ce module, et où les première et deuxième extrémités correspondantes (12', 14') de chaque élément joue (10') sont parallèles l'une à l'autre ;

chacun des éléments joues de la pluralité d'éléments joues (10') présentant une nervure (58) formée en une seule pièce avec la surface supérieure (55) des extrémités (12', 14') de la joue et faisant saillie vers le haut sur cette surface, et où chaque nervure (58) s'étend de la première extrémité (12') à la deuxième extrémité (14') de l'élément joue (10') correspondant ; des premier et deuxième éléments transversaux (16', 18') formés en une seule pièce avec les éléments joues (10') et disposés angulairement par rapport aux éléments joues (10') adjacents et s'étendant transversalement entre ces éléments joues, les premier et deuxième éléments transversaux (16', 18') possédant des surfaces inclinées vers l'extérieur (17', 19'), respectivement, des surfaces inclinées opposées face à face (21') et des surfaces supérieure et inférieure (50, 52) respectivement, qui sont coplanaires avec les surfaces supérieure et inférieure (55, 56) correspondantes des éléments joues (10') adjacents, et où les surfaces opposées face à face (21') définissent des évidements d'engrènement de roues à chaîne adaptés pour s'accoupler aux dents (68) de la pluralité de roues à chaîne (40), et qui sont disposés entre les axes d'articulation du module ; et

une pluralité de tringles d'articulation (27') destinées à articuler la pluralité de modules les uns aux autres bout à bout pour former la courroie transporteuse, où l'articulation de la pluralité de modules les uns aux autres bout à bout pour former la courroie transporteuse est obtenue en insérant des tringles d'articulation (27') dans les ouvertures centrales (62) des premières extrémités de joues (12', 12') et des deuxièmes extrémités de joues (14', 14') alternant entre elles et adjacentes les unes aux autres, de sorte que les portions en saillie transversale correspondantes (60) des premières extrémités de joues (12', 12') adjacentes et des deuxièmes extrémités de joues (14', 14') adjacentes, respectivement, sont articulées dans des positions relatives opposées face à face, caractérisée en ce que

les premières et deuxièmes extrémités correspondantes (12', 14') de chaque élément joue individuel (10') sont déportées latéralement l'une par rapport à l'autre ;

les portions en saillie transversale (60) des premières et deuxièmes extrémités (12', 14') des joues qui s'étendent jusqu'à leurs premiers ou deuxièmes éléments transversaux respectifs (16', 18') possèdent une épaisseur uniforme de sorte que la configuration épaulée s'étend sans interruption entre les extrémités de joues respectives (12', 14') et l'élément transversal (16', 18'), où les surfaces supérieures de la portion en saillie transversale (60) de la première extrémité (12') et la portion en saillie transversale (60) de la deuxième extrémité (14') de l'élément joue (10') correspondant sont coplanaires avec les surfaces supérieures des premier et deuxième éléments transversaux (16', 18') et font saillie transversalement dans des directions opposées par rapport à la nervure (58) correspondante ; et

où les portions de nervure desdites extrémités (14') déportées et parallèles de chaque élément joue (10') sont réunies en une seule pièce par une portion oblique de la nervure.

2. Courroie transporteuse selon la revendication 1, caractérisée en ce qu'elle comprend un peigne de transporteur (34) disposé à proximité d'une extrémité de la courroie transporteuse, le peigne de transporteur (34) comprenant une pluralité de dents (36) disposées pour passer entre les nervures (58) de la courroie transporteuse.

3. Courroie transporteuse selon la revendication 1, caractérisée en ce que les modules assemblés bout à bout forment un contour d'une configuration sensiblement rectangulaire.

**Fig. 1**

**Fig. 2**

**Fig. 4**      **Fig. 3**      **Fig. 5**

Fig. 6